# DEMANDE DE BREVET EUROPEEN

(11) **EP 2 000 339 A1**
(43) Date de publication de la demande: **10.12.2008**
(21) Numéro de dépôt: 08157364.4
(22) Date de dépôt: 30.05.2008
(51) Int. Cl.: B60H 1/00

(54) **Installation de ventilation, chauffage et/ou de climatisation d'un véhicule automobile agencée pour absorber les ondes acoustiques**

(30) Priorité: 08.06.2007 FR 0704101
(71) Demandeur: Valeo Systèmes Thermiques, 78321 Le Mesnil Saint Denis Cedex (FR)
(72) Inventeur: Leborgne, José, 28600 Luisant (FR); Droulez, Eric, 92150 Suresnes (FR); Paitrault, Thibaut, 78120 Rambouillet (FR); Cheriaux, Olivier, 28210 Nogent Le Roi (FR); Truillet, Franck, 28410 Bu (FR)
(74) Mandataire: Léveillé, Christophe

(57) **Abrégé**

L'invention a pour objet une installation de ventilation, de chauffage et/ou de climatisation d'un véhicule automobile comportant une pluralité d'éléments (9,14), dont au moins un premier élément qui est réalisé en un premier matériau acoustiquement réverbérant et au moins un deuxième élément qui est au moins partiellement réalisé en un deuxième matériau dont le coefficient de transmission acoustique est supérieur à celui du premier matériau. L'épaisseur du deuxième élément, indifféremment fixe (9) ou mobile (14), est comprise entre 0,3 mm et 3 mm.

## Description

### Domaine technique de l'invention.

La présente invention est du domaine des installations de ventilation, de chauffage et/ou de climatisation, notamment d'un véhicule automobile. Elle a pour objet une telle installation agencée pour atténuer l'effet d'ondes acoustiques, notamment générées lors du parcours à l'intérieur de ladite installation d'un flux d'air entraîné par un pulseur constitutif de ladite installation. Elle a aussi pour objet un procédé d'obtention d'une paroi constitutive de l'installation ou d'un volet de répartition d'air également constitutif de ladite installation.

### Etat de la technique.

Dans le domaine automobile, il est courant d'équiper un véhicule d'une installation de ventilation, de chauffage et/ou de climatisation pour réguler les paramètres aérothermiques de l'air contenu dans l'habitacle du véhicule, tels que la température et/ou la vitesse d'un flux d'air délivré par l'installation à l'intérieur de l'habitacle. L'installation est susceptible d'être une installation principale qui est prévue pour réguler globalement l'air contenu dans l'habitacle. L'installation est également susceptible d'être une installation secondaire qui est placée en aval d'une installation principale, selon le sens d'écoulement du flux d'air, pour compléter localement la régulation générale des paramètres aérothermiques procurée par l'installation principale. L'installation est enfin susceptible d'être une installation auxiliaire, placée en une quelconque zone spécifique de l'habitacle, telle qu'une zone située à l'arrière du véhicule, pour réguler de manière autonome et indépendamment de toute autre installation principale et/ou secondaire les paramètres aérothermiques de l'air contenu dans l'habitacle et/ou de l'air de la zone spécifique.

Dans sa généralité, une telle installation est principalement constituée d'un boîtier qui loge un pulseur pour prélever un flux d'air à l'intérieur et/ou à l'extérieur du véhicule à travers une entrée d'air. Le flux d'air circule à l'intérieur de l'installation le long d'un parcours d'air jusqu'à être évacué vers l'habitacle du véhicule à travers une sortie d'air. Le boîtier loge également des moyens de traitement thermique du flux d'air prélevé, tels qu'un radiateur, un évaporateur, des cellules de type Peltier ou analogues, pour refroidir et/ou réchauffer le flux d'air prélevé préalablement à sa délivrance à travers la sortie d'air.

Le boîtier comporte au moins un élément fixe qui délimite une enceinte à l'intérieur de laquelle circule le flux d'air. L'élément fixe est réalisé par moulage d'un premier matériau acoustiquement réverbérant, thermoplastique notamment, tel que le polypropylène ou l'acrylonitrile-butadiène-styrène « ABS ». Un tel élément fixe est par exemple un élément de paroi externe qui borde l'enceinte et l'isole de l'environnement extérieur. Par exemple encore, un tel élément fixe est une cloison interne qui sépare l'un de l'autre deux canaux de circulation d'air ménagés à l'intérieur de l'enceinte.

Le boîtier comporte aussi couramment au moins un élément mobile tel qu'un volet de répartition d'air, du type volet tambour, volet papillon ou analogue, qui est destiné à autoriser et/ou interdire un passage d'air à travers une conduite de circulation d'air qui le loge. Un tel volet est par exemple un volet de mixage qui est destiné à réguler un mélange d'un flux d'air chaud et d'un flux d'air froid que véhicule l'installation. Un tel volet est aussi susceptible d'être un volet de distribution d'air disposé au débouché de la sortie d'air de l'installation, ou encore un volet de recyclage placé au débouché de l'entrée d'air de l'installation.

Un problème général posé dans le domaine réside dans le fait que la mise en oeuvre d'une telle installation induit des ondes acoustiques qui sont susceptibles de créer des nuisances sonores pour un occupant du véhicule. Plus particulièrement, la mise en oeuvre du pulseur génère des niveaux sonores d'une amplitude d'autant plus importante que la vitesse de rotation du pulseur est élevée. D'autre part, le flux d'air accéléré par le pulseur est susceptible de heurter des obstacles lors de son parcours à l'intérieur de l'installation. De tels heurts font subir une compression supplémentaire au flux d'air, ce qui génère des ondes acoustiques. Les ondes générées tendent à se propager à l'intérieur du boîtier jusqu'à leur délivrance à l'intérieur de l'habitacle à travers la sortie d'air.

Le document EP1470011(CARCOUSTICS TECH CENTER GmbH) propose un boîtier d'une installation de ventilation, de chauffage et/ou de climatisation dont au moins un élément de paroi externe est réalisé en un deuxième matériau acoustiquement absorbant. Ce deuxième matériau comprend par exemple une première couche d'un matériau perméable à l'air, tel que des fibres de polyéthylène téréphtalate « PET ». Pour garantir une étanchéité en fonctionnement, ce deuxième matériau comprend également une deuxième couche d'un film étanche à l'air, qui recouvre la première couche. Cet art antérieur utilise donc trois couches de matériau différent : le corps de la pièce, le matériau acoustique et le matériau étanche à l'air.

Il apparaît à l'usage qu'une telle installation mérite d'être améliorée au regard des performances d'absorption des ondes acoustiques qu'elle procure. On rappelle à cet effet que du point de vue acoustique un matériau se caractérise par son aptitude à réfléchir les ondes acoustiques, sa capacité à dissiper de telles ondes et sa faculté à transmettre ces dernières. Un matériau à fort coefficient de transmission d'ondes acoustiques permet à ces dernières de le traverser en quantité importante. La qualité d'absorption des ondes acoustiques que procure un matériau se définit par la somme de sa capacité à dissiper ces ondes et sa faculté à les transmettre. Autrement dit, plus un matériau est absorbant acoustiquement, moins il réfléchit les ondes acoustiques qu'il reçoit. Ce matériau est en quelque sorte transparent aux ondes acoustiques.

Il apparaît aussi que la réalisation d'une telle installation s'avère complexe et requiert des pièces obtenues par assemblage entre elles d'au moins deux couches de matériau différent, ce qui est fréquemment long et délicat. De surcroît, ces matériaux sont couramment composés de matériaux choisis pour leur capacité à dissiper les ondes acoustiques, or de tels matériaux sont onéreux.

### Objet de l'invention.

Le but de la présente invention est de proposer une installation de ventilation, de chauffage et/ou de climatisation d'un véhicule automobile comportant une pluralité d'éléments, dont au moins un premier élément qui est réalisé en un premier matériau acoustiquement réverbérant, et au moins un deuxième élément qui est au moins partiellement réalisé à partir d'un deuxième matériau à fort coefficient de transmission acoustique et imperméable à l'air. Cette installation est agencée de manière à permettre une absorption efficace d'ondes acoustiques générées par un pulseur que comporte l'installation, ou d'ondes acoustiques générées par des heurts subis par un flux d'air qui la traverse, voire d'ondes acoustiques extérieures, par exemple en provenance du moteur du véhicule par l'intermédiaire d'une entrée d'air que comprend l'installation.

Selon une variante de l'invention, l'élément est constitué uniquement du premier matériau et du deuxième matériau sans nécessité d'utiliser une couche supplémentaire, comme c'est le cas de l'art antérieur.

Un autre but de la présente invention est de proposer un procédé d'obtention d'une paroi ou d'un volet de répartition d'air constitutif d'une telle installation, ce procédé étant aisé, rapide et peu coûteux à mettre en oeuvre.

L'installation de la présente invention est une installation de ventilation, de chauffage et/ou de climatisation d'un véhicule automobile comportant une pluralité d'éléments. Ces éléments sont au moins un premier élément qui est réalisé en un premier matériau acoustiquement réverbérant et au moins un deuxième élément qui est au moins partiellement réalisé en un deuxième matériau dont le coefficient de transmission acoustique est supérieur à celui du premier matériau.

Selon la présente invention, l'épaisseur du deuxième élément est comprise entre 0,3 mm et 3 mm.

Ces dispositions sont telles que des ondes acoustiques notamment produites par un pulseur que loge l'installation ou par un flux d'air circulant à l'intérieur de l'installation sont efficacement transmises par le deuxième élément à partir de leur franchissement aisé de l'épaisseur de ce dernier. Ces ondes acoustiques sont ainsi évacuées hors de l'installation vers une zone où elles sont dissipées et/ou atténuées pour ne pas affecter le confort d'un occupant présent à l'intérieur de l'habitacle du véhicule. Concernant l'épaisseur du deuxième élément, il est apparu qu'une épaisseur du deuxième élément comprise entre 0,3 mm et 3 mm permet le meilleur compromis possible pour le deuxième élément entre une résistance mécanique satisfaisante, une absorption acoustique efficace et une bonne étanchéité à l'air.

Le deuxième élément est avantageusement un élément fixe.

L'élément fixe est notamment un élément de paroi constitutif d'un boîtier que comporte l'installation.

A partir de sa faculté à transmettre les ondes acoustiques, le deuxième élément fixe permet une dissipation des ondes acoustiques générées vers l'extérieur de l'installation, et finalement une atténuation et/ou une absorption de ces dernières au contact d'éléments extérieurs à l'installation, telle qu'une planche de bord ou analogue.

L'élément fixe est par exemple une cloison interne ménagée à l'intérieur d'une enceinte délimitée par le boîtier, telle qu'un déflecteur, une séparation centrale, une écope ou analogue.

Ces dispositions sont telles que les ondes acoustiques sont susceptibles de se disperser à l'intérieur de l'installation à partir d'un franchissement de la cloison interne jusqu'à leur dissipation hors de l'installation ou leur atténuation à l'intérieur de l'installation par rebonds successifs contre ses parois internes.

Le deuxième élément est avantageusement un élément mobile.

Il en ressort qu'un tel élément mobile contribue à la dissipation des ondes acoustiques à l'intérieur de l'installation jusqu'à leur évacuation hors de cette dernière ou leur atténuation par rebonds successifs contre le premier élément au moins de l'installation.

L'élément mobile est notamment un volet de répartition d'air.

Le volet de répartition d'air est par exemple l'un quelconque d'un volet de mixage, d'un volet de distribution et d'un volet de recyclage.

Le volet de répartition d'air est préférentiellement constitué d'une âme qui est réalisée à partir du premier matériau et qui est recouverte d'un revêtement réalisé à partir du deuxième matériau.

Un tel volet de répartition cumule les avantages de chacun des premier et deuxième matériaux. Plus particulièrement, le premier matériau confère au volet de répartition d'air sa rigidité sans que sa capacité à réverbérer les ondes acoustiques soit gênante.

L'âme est avantageusement agencée en un cadre à l'intérieur duquel est ménagé au moins un ajour obturé par le revêtement.

Le cadre est notamment pourvu de nervures de renfort.

Le revêtement comporte avantageusement une extension qui constitue une lèvre périphérique d'étanchéité formée de manière unitaire avec le revêtement qui recouvre l'âme du volet.

Ces dispositions sont telles qu'un tel joint périphérique procure une étanchéité aéraulique satisfaisante lorsqu'il est en contact avec une paroi d'un conduit qui le loge. Un tel revêtement transmet efficacement à sa surface les ondes acoustiques, notamment celles qui sont générées lors de la mise en butée du joint périphérique contre ladite paroi.

Le deuxième matériau est préférentiellement un matériau étanche à l'air pour un flux d'air véhiculé par l'installation d'un débit de l'ordre de 600 g/h.

Par exemple, le deuxième matériau est indifféremment composé de caoutchouc, de terpolymère d'éthylène-propylène-diène « EPDM », de polychlorure de vinyle « PVC » ou de styrène éthylène butylène styrène « SEBS ».

Un procédé d'obtention d'un tel volet de répartition est reconnaissable en ce que le revêtement et l'âme sont conjointement obtenus par bi-injection.

Un autre procédé d'obtention d'un tel volet de répartition est reconnaissable en ce que le revêtement est rapporté sur l'âme par surmoulage.

### Description des figures.

La présente invention sera mieux comprise, et des détails en relevant apparaîtront, à la lecture de la description qui va être faite d'une forme préférée de réalisation en relation avec les figures des planches annexées, dans lesquelles :
La fig.1 est une vue schématique d'une installation de ventilation, de chauffage et/ou de climatisation selon la présente invention.
La fig.2 est une vue schématique d'un volet de répartition d'air constitutif de l'installation représentée sur la figure précédente.

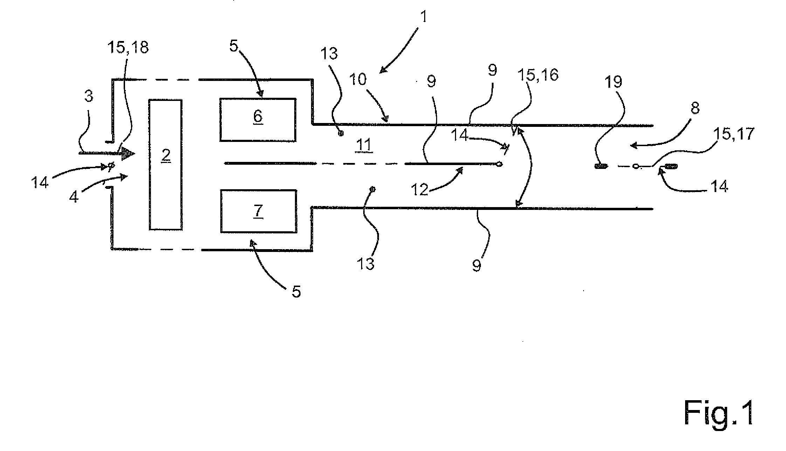

Sur la fig.1, une installation de ventilation, de chauffage et/ou de climatisation destinée à équiper un véhicule automobile comprend un boîtier 1 logeant un pulseur 2 pour prélever un flux d'air 3 à l'extérieur du boîtier 1 à travers une entrée d'air 4 et des moyens de traitement thermique 5 du flux d'air prélevé 3. Ces derniers 5 sont par exemple constitués d'un évaporateur 6 et d'un radiateur 7, ou tout autre moyen analogue, pour respectivement refroidir et réchauffer le flux d'air prélevé 3 préalablement à sa délivrance à l'intérieur de l'habitacle à travers une sortie d'air 8.

Le boîtier 1 est réalisé à partir de l'assemblage entre eux de plusieurs éléments fixes 9, tels qu'un élément de paroi 10 qui borde une enceinte 11 délimitée par le boîtier 1, ou une cloison interne 12 ménagée à l'intérieur de l'enceinte 11 pour séparer l'un de l'autre deux canaux 13 de circulation d'air. Ces éléments fixes 9 sont habituellement réalisés en un premier matériau, acoustiquement réverbérant, tel qu'un polypropylène ou analogue.

Le boîtier 1 est couramment équipé d'un élément mobile 14 entre une position d'ouverture et une position de fermeture pour autoriser et/ou interdire un passage du flux d'air. L'élément mobile 14 est notamment constitué d'un volet de répartition d'air 15, tel qu'un volet de mixage 16 logé à l'intérieur du boîtier 1 pour réguler un mélange de flux d'air froid et de flux d'air chaud, ou un volet de distribution 17 équipant la sortie d'air 8 ou encore un volet de recyclage 18 équipant l'entrée d'air 4 pour autoriser l'entrée d'air intérieur et/ou extérieur du véhicule.

La mise en oeuvre du pulseur 2 et/ou la circulation du flux d'air prélevé 3 à l'intérieur du boîtier 1 génèrent des ondes acoustiques qui tendent à se propager à l'intérieur de l'enceinte 11 jusqu'à franchir la sortie d'air 8 et induire des nuisances sonores pour des occupants du véhicule installés à l'intérieur de l'habitacle.

Pour pallier cet inconvénient, la présente invention propose avantageusement qu'au moins un des éléments 9,14, indifféremment fixe 9 ou mobile 14, soit réalisé au moins partiellement en un deuxième matériau présentant un coefficient de transmission acoustique supérieur à celui du premier élément et soit d'une épaisseur comprise entre 0,3 mm et 3 mm. Il apparaît en effet qu'une telle épaisseur dudit élément 9,14 procure un résultat satisfaisant quant au compromis à trouver entre une bonne résistance mécanique de l'élément fixe et/ou mobile 9,14, une transmission satisfaisante des ondes acoustiques et une bonne étanchéité à l'air. Il résulte de ces dispositions qu'une fraction des ondes acoustiques parcourant l'installation sont susceptibles d'être évacuées hors du boîtier 1 à travers ledit élément fixe 9 et/ou sont susceptibles de traverser ledit élément mobile 14, pour ne pas être guidées à l'intérieur de l'enceinte 11 jusqu'à la sortie d'air 8 en communication avec l'habitacle.

Ledit élément fixe ou mobile 9,14 est par exemple réalisé à partir d'un matériau étanche à l'air pour un flux d'air 3 circulant à l'intérieur du boîtier 1 présentant un débit massique d'air de l'ordre de 600 g/h. A titre d'exemple, ledit élément 9,14 est réalisé en caoutchouc, ou en terpolymère d'éthylène-propylène-diène « EPDM » en polychlorure de vinyle « PVC » ou en styrène éthylène butylène styrène « SEBS ». On relèvera qu'un tel élément 9,14 est aisé à réaliser et que sa mise en oeuvre est simple et peu coûteuse par rapport à d'autres éléments proposés par l'art antérieur et privilégiant la dissipation des ondes acoustiques à partir de plusieurs matériaux superposés, plutôt que la transmission de ces ondes telle que proposée par la présente invention.

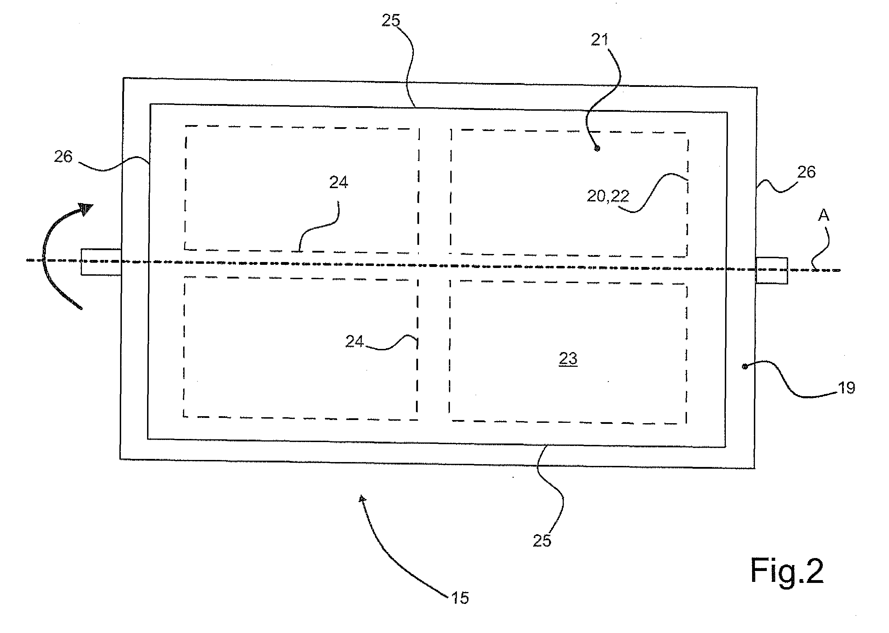

Sur la fig.2, le volet de répartition d'air 15 est équipé d'un joint périphérique d'étanchéité 19, pour garantir une interdiction de passage d'air à travers le canal 13, l'entrée 4 ou la sortie 8 d'air qu'il équipe. Le volet de répartition d'air 15 est constitué d'une âme 20 réalisée à partir du premier matériau et d'un revêtement 21 réalisé à partir du deuxième matériau. L'âme 20 est agencée en un cadre 22 à l'intérieur duquel est ménagé des ajours 23. Le cadre 22 est pourvu de nervures de renfort 24 qui s'étendent entre deux bords opposés 25,26 du cadre 22. Les ajours 23 sont obturés par le revêtement 21 pour garantir une étanchéité à l'air du volet de répartition d'air 15. Le volet de répartition d'air 15 est mobile en rotation autour d'un axe de rotation A qui est confondu avec une nervure de renfort 24 pour garantir une robustesse au volet de répartition d'air 15.

Selon diverses variantes de réalisation du volet de répartition d'air 15, le revêtement 21 et l'âme 20 sont conjointement obtenus par bi-injection des matières respectives qui les constituent, ou sont réalisés par surmoulage du revêtement 21 sur l'âme 20. On obtient ainsi une cohésion par compatibilité de matière entre le matériau du premier élément et le matériau du deuxième élément. Selon l'une et l'autre de ces variantes, la lèvre périphérique d'étanchéité 19 est aisément réalisée dans le même matériau constitutif que le revêtement 21 en s'étendant à la périphérie de l'âme 20 du volet de répartition d'air 15. Autrement dit, la lèvre périphérique d'étanchéité 19 constitue un débordement et/ou une extension du revêtement 21 à la périphérie de l'âme 20 et se trouve réalisée pendant la même étape de surmoulage ou de bi-injection au cours de laquelle est réalisée le revêtement 21.

## Revendications

1. Installation de ventilation, de chauffage et/ou de climatisation d'un véhicule automobile comportant une pluralité d'éléments (9,14), dont au moins un premier élément qui est réalisé en un premier matériau acoustiquement réverbérant et au moins un deuxième élément qui est au moins partiellement réalisé en un deuxième matériau dont le coefficient de transmission acoustique est supérieur à celui du premier matériau, **caractérisée en ce que** l'épaisseur du deuxième élément est comprise entre 0,3 mm et 3 mm.

2. Installation selon la revendication précédente, **caractérisée en ce que** le deuxième élément est un élément fixe (9).

3. Installation selon la revendication 2, **caractérisée en ce que** l'élément fixe (9) est un élément de paroi constitutif d'un boîtier (1) que comporte l'installation.

4. Installation selon la revendication 3, **caractérisée en ce que** l'élément fixe (9) est une cloison interne (12) ménagée à l'intérieur d'une enceinte (11) délimitée par le boîtier (1).

5. Installation selon la revendication 1, **caractérisée en ce que** le deuxième élément est un élément mobile (14).

6. Installation selon la revendication 5, **caractérisée en ce que** l'élément mobile (14) est un volet de répartition d'air (15).

7. Installation selon la revendication 6, **caractérisée en ce que** le volet de répartition d'air (15) est l'un quelconque d'un volet de mixage (16), d'un volet de distribution (17) et d'un volet de recyclage (18).

8. Installation selon l'une quelconque des revendications 6 et 7, **caractérisée en ce que** le volet de répartition d'air (15) est constitué d'une âme (20) qui est réalisée à partir du premier matériau et qui est recouverte d'un revêtement (21) réalisé à partir du deuxième matériau.

9. Installation selon la revendication 8, **caractérisée en ce que** l'âme (20) est agencé en un cadre (22) à l'intérieur duquel est ménagé au moins un ajour (23) obturé par le revêtement (21).

10. Installation selon la revendication 9, **caractérisée en ce que** le cadre (22) est pourvu de nervures de renfort (24).

11. Installation selon l'une quelconque des revendications 8 à 10, **caractérisée en ce que** le revêtement (21) comporte une extension qui constitue une lèvre périphérique d'étanchéité (19).

12. Installation selon l'une quelconque des revendications précédentes, **caractérisée en ce que** le deuxième matériau est un matériau étanche à l'air pour un flux d'air (3) véhiculé par l'installation d'un débit de l'ordre de 600 g/h.

13. Installation selon la revendication 12, **caractérisée en ce que** le deuxième matériau est indifféremment composé de caoutchouc, de terpolymère d'éthylène-propylène-diène « EPDM », de polychlorure de vinyle « PVC » ou de styrène éthylène butylène styrène « SEBS ».

14. Procédé d'obtention d'un volet de répartition constitutif d'une installation selon l'une quelconque des revendications 8 à 13, **caractérisé en ce que** le revêtement (21) et l'âme (20) sont conjointement obtenus par bi-injection.

15. Procédé d'obtention d'un volet de répartition constitutif d'une installation selon l'une quelconque des revendications 8 à 13, **caractérisé en ce que** le revêtement (21) est rapporté sur l'âme (20) par surmoulage.
